# EUROPÄISCHE PATENTSCHRIFT

(11) **EP 2 489 610 B1**
(45) Veröffentlichungstag und Bekanntmachung des Hinweises auf die Patenterteilung: **14.05.2014**
(21) Anmeldenummer: 12155462.0
(22) Anmeldetag: 14.02.2012
(51) Int. Cl.: B65G 13/00, B65G 13/075, B65G 13/11

(54) **Schwerkraft-Rollenbahn**
Gravitational roller conveyor
Bande de rouleaux à gravité

(30) Priorität: 17.02.2011 DE 202011000375 U
(43) Veröffentlichungstag der Anmeldung: 22.08.2012
(73) Patentinhaber: Winkler, Walter, 92711 Parkstein (DE)
(72) Erfinder: Winkler, Walter, 92711 Parkstein (DE)
(74) Vertreter: Lang, Christian

(56) Entgegenhaltungen:
- EP-A2- 0 145 232
- DE-U1- 9 109 832
- DE-U1- 9 403 168
- US-A- 4 182 440
- US-A1- 2002 043 442

## Beschreibung

### GEBIET DER ERFINDUNG

Die vorliegende Erfindung betrifft eine Schwerkxaft-Förderbabn mit einer Transportbahn, welche geneigt zur Waagrechten angeordnet ist und Transportmittel umfasst, sodass auf der Transportbahn anordenbare Träger oder Güter durch die Schwerkraft bewegt werden können.

### STAND DER TECHNIK

Schwerkraft-Förderbahnen und insbesondere Schwerkraft-Rollenbahnen, bei denen die Transportmittel durch frei drehbare Rollen ausgebildet sind, sind aus dem Stand der Technik bekannt. Durch die geneigte Anordnung einer derartigen Rollenbahn mit einer Vielzahl von hintereinander angeordneten, frei drehbaren Rollen kann ein Gegenstand, der darauf angeordnet ist, durch seine Schwerkraft entlang der Rollenbahn bewegt werden.

Allerdings sind derartige Schwerkraft-Rollenbahnen üblicherweise nur für Gegenstände geeignet, welche eine im Wesentlichen flache Auflagerfläche aufweisen, die auf die Ausführung der Rollenbahn hinsichtlich der Dimensionen angepasst ist Insofern ist die variable Einsetzbarkeit derartiger Schwerkraft-Rollenbahnen für unterschiedliche Gegenstände eingeschränkt. Ein Beispiel für eine derartige Rollenbahn ist in der US 4,182,440 gegeben.

Die US 2002/0043442 A1 beschreibt zum Transport von sowohl Transportpaletten als auch von Kartons einbahnige Rollenförderer mit einer entsprechenden Dimensionierung quer zur Förderrichtung mit quer zur Förderrichtung angeordneten Rollenenordnungen, um Kartons und Paletten mit unterschiedlichen Dimensionen transportieren zu können.

Die DE 94 03 168 U offenbart eine gattungsgemäße Schwerkraft-Förderbahn und betrifft eine Transportvorrichtung für schwere Gegenstände in Form einer Schwerkraft - Rollenbahn, bei der unterschiedliche harte bzw. weiche Rollen eingesetzt werden, damit zu schwere Lasten keine zu hohe Geschwindigkeit auf der Schwerkraft - Rollenbahn erreichen.

Bei der Kommissionierung von Waren für den Einzelhandel werden eine Vielzahl unterschiedlicher Waren zu Verpackungseinheiten zusammengestellt, die mittels LKW an die einzelnen Einzelhandelsgeschäfte ausgeliefert werden. Durch die große Anzahl von unterschiedlichen Waren und die verschiedenen Verpackungserfordernisse ist es hier erforderlich, dass unterschiedliche Verpackungseinheiten gebildet werden, sodass Fördersysteme, wie beispielsweise Schwerkraft-Förderbahnen in unterschiedlicher Weise ausgebildet werden müssen, um die unterschiedlichen Verpackungseinheiten handhaben zu können.

Bei der Kommissionierung von Waren für den Einzelhandel, insbesondere Lebensmitteleinzelhandel, werden diese beispielsweise häufig auf EU-Standardpaletten oder sogenannten Rollcontainern, welche eigene Transportrollen aufweisen, verpackt, sodass mittels dieser Träger in Form der Rollcontainer und EU-Standardpaletten ein Transport von Waren möglich ist. Durch die verschiedene Ausgestaltung den Träger, also der Rollcontainer und EU-Standardpaletten, ist für die Handhabung derartiger Träger ein hoher Aufwand dahingehend zu betreiben, dass unterschiedliche Handhabungsmittel vorgesehen werden müssen.

### OFFENBARUNG DER ERFINDUNG

### AUFGABE DER ERFINDUNG

Es ist deshalb Aufgabe der vorliegenden Erfindung eine Schwerkraft-Förderbahn bereit zu stellen, welche einen variablen Einsatz ermöglicht. Dabei soll die Schwerkraft-Förderbahn gleichzeitig einfach aufgebaut und einfach bedienbar sein und auch einen sicheren Transport gewährleisten.

### TECHNISCHE LÖSUNG

Diese Aufgabe wird gelöst durch eine Schwerkraft-Förderbahn mit den Merkmalen des Anspruchs 1. Vorteilhafte Ausgestaltungen sind Gegenstand der abhängigen Ansprüche.

Die Erfindung geht davon aus, dass eine Schwerkraft-Förderbahn mit einer zur Waagrechten geneigten Transportbahn und entsprechenden Transportmitteln so ausgebildet ist, dass mindestens erste, selbst fahrende Träger mit Rädern an jeder Unterseite und mindestens zweite, nicht-selbstfahrende Träger mit Auflageflächen an ihrer Unterseite gleichzeitig befördert werden können.

Die Transportbahn weist mindestens drei Transportbereiche auf, die sich parallel zueinander entlang der Transportrichtung der Transportbahn erstrecken, wobei jeder Transportbereich Transportmittel aufweist.

Die Transportmittel können entsprechend des Schwerkrafttransports durch die Träger selbst antreibbare Tansportmittel sein, die in Form von Endlosbändern, Rollen, Rädern oder Gleitelementen vorliegen können, wobei insbesondere Endlosbänder, Rollen und/oder Räder als zumindest teilweise frei drehbar gelagerte Komponenten ausgebildet sein können.

Die Transportbereiche sind zu Gruppen zusammengefasst, sodass jede Gruppe für einen oder mehrere Typen von Trägern ausgebildet ist, sodass also ein Träger beispielsweise auf zwei Transportbereichen, die zu einer Gruppe zusammengefasst sind, transportiert wird, während ein anderer Typ von Träger auf dem dritten Transportbereich transportiert wird. Für Rollcontainer und EU-Standart Paletten könnte dies beispielsweise so verwirklicht sein, dass die Rollcontainer auf zwei parallel angeordneten Rollenbahnen transportiert werden, wobei die Grundplatte des Rollcontainers, an dessen Unterseite die Räder angeordnet sind, auf den Rollen aufliegt, während die Räder nach unten frei hervorstehen. Zwischen den beiden Rollenbahnen könnte eine dritte Rollenbahn vorgesehen sein, die beispielsweise tiefer als die ersten beiden Rollenbahnen liegt, auf welcher dann entsprechend die EU-Standardpaletten transportiert werden könnten.

Entsprechend weisen die Transportbereiche zumindest teilweise unterschiedliche Transportebenen auf, die gegeneinander versetzt sind .

Am Ende der Schwerkraft-Förderbahn kann mindestens eine Bremseinrichtung zum Abbremsen der Träger vorgesehen sein sowie eine Identifizierungseinrichtung zur Identifizierung der verschiedenen Träger, um beispielsweise im Zusammenwirken mit der Bremseinrichtung eine trägerspezifische Bremsung auszuwählen oder zu aktivieren.

### KURZBESCHREIBUNG DER FIGUREN

Die beigefügten Zeichnungen zeigen in rein schematischer Weise in
- Fig. 1: eine Seitenansicht einer erfindungsgemäßen Schwerkraft-Rollenbahn;
- Fig. 2: eine Draufsicht auf die Schwerkraft-Rollenbahn aus Fig. 1
- Fig. 3: eine Draufsicht auf das Ende einer erfindungsgemäßen Schwerkraft-Rollenbahn.

### AUSFÜHRUNGSBEISPIEL

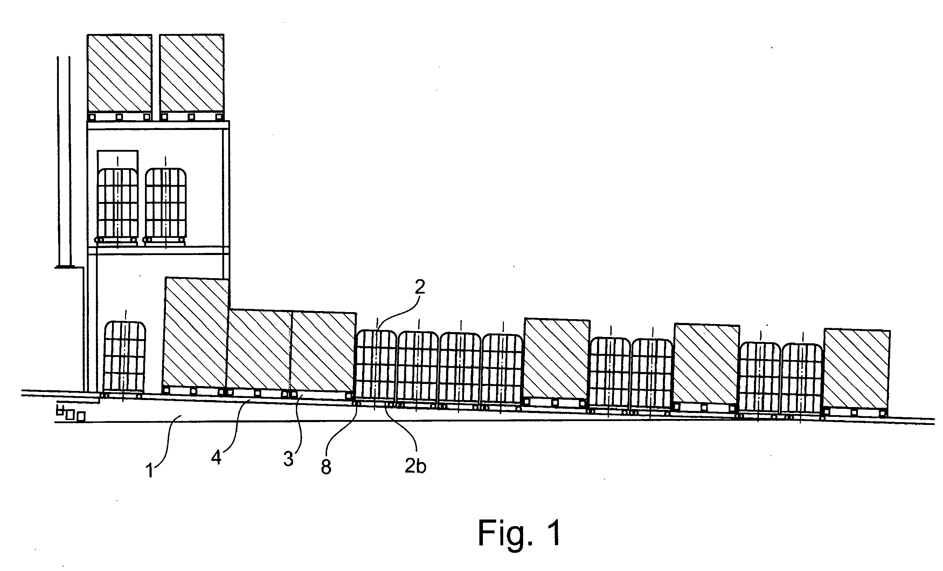

Weitere Vorteile, Kennzeichen und Merkmale der vorliegenden Erfindung werden bei der nachfolgenden detaillierten Beschreibung eines Ausführungsbeispiels deutlich. In Fig. 1 ist eine erfindungsgemäße Schwerkraft-Rollenbahn 1 gezeigt, auf der gleichzeitig oder nacheinander unterschiedliche Träger in Form von Rollcontainern 2 und EU-Standardpaletten 3 transportiert werden können. Der Transport erfolgt dabei durch die Schwerkraft der Träger 2, 3 und der geneigten Anordnung der Rollenbahn 1.

In der Seitenansicht ist eine Strebe 4 der Schwerkraft-Rollenbahn 1 gezeigt, die deutlich geneigt gegenüber der Horizontalen verläuft, und zwar von der linken Bildseite zur rechten Bildseite von oben nach unten. Entsprechend werden die Träger durch die Schwerkraft aufgrund ihres Eigengewichts und der auf den Trägern 2, 3 befindlichen Waren auf der Rollenbahn 1 in der Fig. 1 nach rechts bewegt.

Die Rollenbahn 1 kann beispielsweise, wie in Fig. 1 gezeigt ist, am Warenausgang eines Logistikzentrums angeordnet sein, wo die kommissionierten Waren auf den unterschiedlichen Trägern 2, 3 zur Abholung durch LKWs bereitgestellt werden.

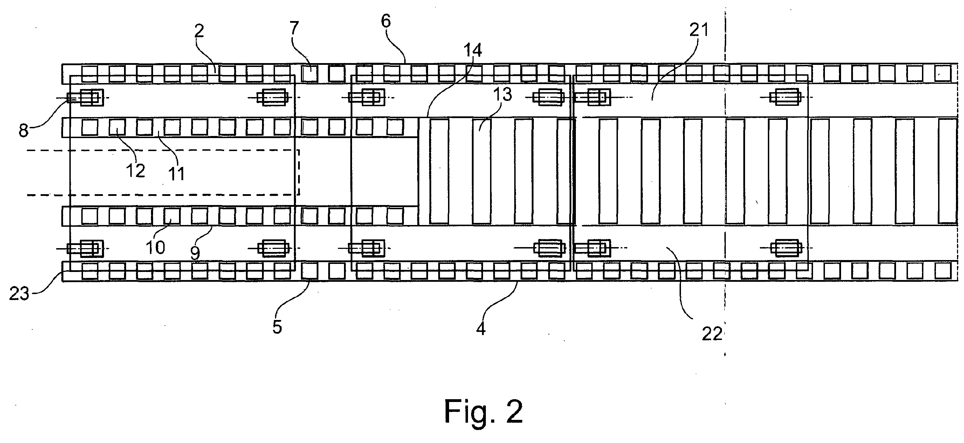

Die Fig. 2 zeigt eine Draufsicht auf die Schwerkraft-Rollenbahn 1 aus Fig. 1. Im unteren Bildbereich der Fig. 2 ist die Strebe 4 zu erkennen, in der eine Vielzahl von Rollen 5 angeordnet sind, die frei drehbar in der Strebe 4 gelagert sind. Parallel zur Strebe 4 ist eine Strebe 6 beabstandet zur Strebe 4 angeordnet und weist ebenfalls eine Vielzahl von Rollen 7 auf, die wiederum frei drehbar in der Strebe 6 gelagert sind. Zwischen den Streben 4 und 6 sind in einem Teilbereich der Schwerkraft-Rollenbahn 1 zwei weitere Streben 9 und 11 angeordnet, während in einem anderen Teilbereich der Schwerkraft-Rollenbahn 1 eine Platte 13 vorgesehen ist. Sowohl in den Streben 9 und 11 als auch in der Platte 13 sind wiederum frei drehbar eine Vielzahl von Rollen 10, 12, 14 hintereinander entlang der Transportrichtung gelagert. Zwischen den Streben 6 und 11 bzw. zwischen der Strebe 6 und der Platte 13 ist eine Ausnehmung 21 ausgebildet, während zwischen der Strebe 4 und der Strebe 9 sowie zwischen der Strebe 4 und der Platte 13 eine Ausnehmung 22 vorgesehen ist. Die Ausnehmungen 21 und 22 sind durchgehend entlang der gesamten Länge der Schwerkraft-Rollenbahn 1 entlang der Transportrichtung vorgesehen, wobei die Ausnehmungen 21 und 22 einen ausreichend tiefen Freiraum zur Verfügung stellen, um die Räder 8 der Rollcontainer 2 aufzunehmen, wenn die Rollcontainer 2 auf den Rollenbahnen 4, 5; 6, 7; 9, 10; 11, 12 und 13, 14 mit ihrer Bodenplatte 23 (siehe Fig. 1) gelagert sind.

Erfindungsgemäß definieren die einzelnen Rollenbahnen 4, 5; 6, 7; 9, 10; 11, 12; 13, 14 unterschiedliche Transportebenen, wobei Rollenbahnen zur Definierung eines Transportbereichs zusammengefasst werden, wie beispielsweise die Rollenbahnen 4, 5 und 6, 7, sodass eine Art von Träger, beispielsweise die Rollcontainer 2 lediglich auf diesen Rollenbahnen bewegt werden, während eine zweite Art von Träger, beispielsweise die EU-Standardpaletten 3 auf den Rollenbahnen 9, 10 und 11, 12 bzw. 13, 14, welche dann eine unterschiedliche Transportebene definieren.

Im gezeigten Ausführungsbeispiel der Fig. 2 liegen die Rollcontainer 2 mit ihren Grundplatten 23 auf den Rollenbahnen 4, 5; 6, 7 auf und werden aufgrund der frei drehbaren Rollen durch ihre Schwerkraft entsprechend der Neigung der Schwerkraft-Rollenbahn transportiert, wobei die Räder 8 auf der Unterseite der Rollcontainer 2 in den Ausnehmungen 21 und 22 berührungslos mit geführt werden.

Die EU-Standardpaletten werden nur von den mittleren Rollenbahnen 9, 10 und 11, 12 bzw. 13, 14 gelagert und aufgrund der frei drehbaren Rollen 12, 14 entsprechend der Neigung der Schwerkraft-Rollenbahn 1 bewegt werden.

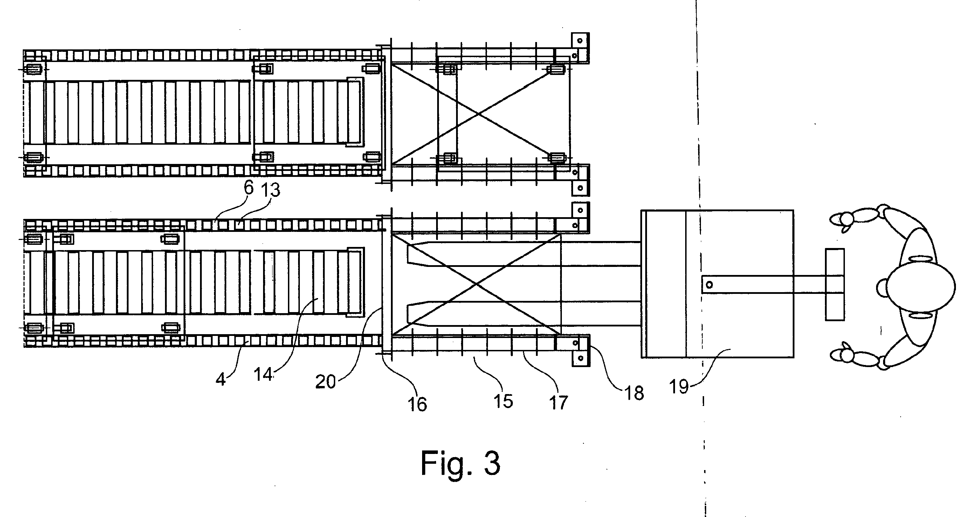

Am Ende der Schwerkraft-Rollenbahn 1, welches in Fig. 3 am Beispiel einer von zwei nebeneinander liegenden Schwerkraft-Rollenbahnen 1 näher beschrieben wird, befindet sich eine Übergabestation 15, an welcher die dorthin transportieren Träger 2, 3 also die Rollcontainer 2 oder die EU-Standardpaletten 3 beispielsweise an Hubwagen zur Beladung von LKWs übergeben werden. Während für die EU-Standardpaletten, die mit ihren Auflageflächen auf den Rollen der Rollenbahnen gelagert waren, Gleitschienen 17 ausreichen, auf denen die EU-Standardpaletten mittels ihrer Restbewegungsenergie bis zum Ende der Schwerkraft-Rollenbahn 1 gleiten können und durch die Reibung bei der Gleitbewegung entsprechend abgebremst werden, können insbesondere für die Rollcontainer zusätzliche Bremseinrichtungen vorgesehen sein. Beispielsweise kann für auch für die EU-Standardpaletten zusätzlich ein Anschlag 18 als Bremseinrichtung vorgesehen sein, der eine letztendliche Abbremsung der EU-Standardpaletten ermöglicht.

In gleicher Weise können auch die Rollcontainer 2 abgebremst werden, wobei hier jedoch vorteilhaft ist, wenn die Rollcontainer 2 an der Übergabestation 15 bereits auf ihren Rädern gelagert sind, um ein einfaches Wegrollen der Rollcontainer 2 aus der Übergabestation 15 zu ermöglichen. Aus diesem Grund kann für die Rollcontainer 2 eine separate Bremseinrichtung (nicht gezeigt) in Form einer Bremswippe oder dergleichen vorgesehen sein, welche die Bewegung der Rollcontainer 2 abbremst, aber anschließend ein einfaches Entfernen der Rollcontainer aus der Übergabestation 15 durch Zurückkippen der Wippe ermöglicht.

Damit die separate Bremseinrichtung für die Rollcontainer 2 aktiviert werden kann, kann zusätzlich eine Identifizierungseinrichtung 16 vorgesehen sein, mittels der identifiziert werden kann, welcher Träger sich gerade der Übergabestation 15 am Ende der Schwerkraft-Rollenbahn 1 nähert. Dies kann durch verschiedene elektronische, mechanische oder elektromechanische Systeme realisiert werden, wobei Fig. 3 ein einfaches mechanisches System in der Weise dargestellt ist, dass eine verschwenkbare Stange 20 quer über die Schwerkraft-Rollenbahn 1 am Übergang zur Übergabestation 15 vorgesehen ist, welche durch die Räder 8 eines Rollcontainers 2 bewegt, also beispielsweise nach unten gedrückt werden kann, sodass durch diese Bewegung der Stange 20 eine mechanische Auslösung einer Bremseinrichtung, beispielsweise in Form einer Bremswippe, ausgelöst werden kann.

Obwohl die vorliegende Erfindung anhand des Ausführungsbeispiels detailliert beschrieben worden ist, ist für den Fachmann selbstverständlich, dass die Erfindung nicht auf dieses

Ausführungsbeispiel beschränkt ist, sondern dass vielmehr Änderungen oder Ergänzungen in der Weise vorgenommen werden können, dass andersartige Kombinationen der vorgestellten Merkmale verwirklicht werden oder dass einzelne Merkmale weggelassen werden, solange der Schutzbereich der beigefügten Ansprüche nicht verlassen wird. Die vorliegende Erfindung beansprucht insbesondere sämtliche Kombinationen aller vorgestellten Merkmale.

## Patentansprüche

1. Schwerkraft-Förderbahn mit einer Transportbahn, welche geneigt zur Waagrechten angeordnet ist und Transportmittel (5, 7, 10, 12, 14) umfasst, so dass auf der Transportbahn anordenbare Träger durch die Schwerkraft bewegt werden, **dadurch gekennzeichnet, dass** erste selbstfahrende Träger (2) mit Rädern an ihrer Unterseite und zweite nicht-selbstfahrende Träger (3) mit Auflageflächen an ihrer Unterseite auf der Schwerkraft-Förderbahn gleichzeitig befördert werden können, wobei die Träger mit ihrer Unterseite zur Transportbahn ausgerichtet angeordnet sind und die Transportbahn mindestens drei Transportbereiche (4, 5; 6, 7; 9, 10; 11, 12; 13,14) aufweist, die sich parallel zueinander entlang der Transportrichtung der Transportbahn erstrecken, wobei jeder Transportbereich Transportmittel aufweist, wobei die ersten Träger (2) Rollcontainer und die zweiten Träger EU-Paletten sind, wobei
die Transportbereiche zumindest teilweise unterschiedliche Transportebenen aufweisen, die gegeneinander versetzt sind, um die unterschiedlichen Träger zu transportieren, wobei ein oder mehrere Transportbereiche zu Gruppen zusammengefasst sind, wobei jede Gruppe für einen oder mehrere Typen von Trägern ausgebildet ist, und wobei
die Transportbereiche durch ein oder mehrere Ausnehmungen (21, 22) voneinander getrennt sind, die sich parallel zu den Transportbereichen entlang der Transportrichtung der Transportbahn erstrecken und die Ausnehmungen (21, 22) entlang der Transportrichtung durchgehend über die gesamte Länge der Transportbahn gegenüber den Transportebenen der benachbarten Transportbereiche einen vorbestimmten Freiraum definieren, so dass die Räder der ersten Träger in den Ausnehmungen bewegt werden können..

2. Schwerkraft-Förderbahn nach Anspruch 1,
**dadurch gekennzeichnet, dass**
die Transportbahn durch die Träger selbst antreibbare Transportmittel (5, 7, 10, 12, 14) umfasst.

3. Schwerkraft-Förderbahn nach Anspruch 1 oder 2,
**dadurch gekennzeichnet, dass**
die Transportbahn mindestens ein Element aus der Gruppe aufweist, die Endlosbänder, Rollen, Räder und Gleitelemente umfasst, wobei insbesondere die Endlosbänder, Rollen und/oder Räder zumindest teilweise frei drehbar gelagert sind.

4. Schwerkraft-Förderbahn nach einem der vorhergehenden Ansprüche,
**dadurch gekennzeichnet, dass**
die Transportmittel Rollen sind, die in drei oder vier parallelen Rollenbahnen angeordnet sind.

5. Schwerkraft-Förderbahn nach einem der vorhergehenden Ansprüche,
**dadurch gekennzeichnet, dass**
am Ende der Transportbahn mindestens eine Bremseinrichtung zum Abbremsen der Träger vorgesehen ist.

6. Schwerkraft-Förderbahn nach einem der vorhergehenden Ansprüche,
**dadurch gekennzeichnet, dass**
am Ende der Transportbahn mindestens eine Identifizierungseinrichtung (16) zur Identifizierung der Träger angeordnet ist.

7. Schwerkraft-Förderbahn nach Anspruch 5 und 6,
**dadurch gekennzeichnet, dass**
Bremseinrichtung und Identifizierungseinrichtung so ausgebildet sind, dass sie derart zusammenwirken, dass die Bremseinrichtung in Abhängigkeit von der Identifizierung des Trägers ausgewählt oder aktiviert wird.

## Claims

1. Gravity conveyor, with a transport track, which is inclined to the horizontal, and comprising transport means (5, 7, 10, 12, 14) such that carriers which can be arranged on the transport track are moved under the force of gravity,
**characterized by the fact that**
self-propelled first carriers (2) with wheels on their undersides and non-self-propelled carriers (3) with support surfaces on their undersides can be conveyed simultaneously on the gravity conveyor, wherein the undersides of the carriers are in alignment with the transport track and the transport track has at least three transportation areas (4, 5; 6, 7; 9,10; 11,12, 13,14) which extend in parallel with one another in the transport direction of the transport track, wherein each transportation area has transport means, wherein the first carriers (2) are roller containers and the second carriers are EU pallets,
wherein at least some of the transportation areas have different transport levels which are offset from one another, so as to transport the various carriers, and
wherein one or more transportation areas are combined into groups, wherein each group is configured for one or more types of carriers, and
wherein the transportation areas are separated from one another by one or more recesses (21, 22) which extend in parallel with the transportation areas and in the transport direction of the transport track and the recesses (21,22) in the transport direction continuously define along the entire length of the transport track a predetermined clearance with respect to the transport levels of the adjacent transportation areas, such that the wheels of the first carriers can be moved in the recesses.

2. Gravity conveyor in accordance with claim 1,
**characterized by** the fact that
the transport track comprises transport means driven by the carriers themselves (5, 7, 10, 12, 14)

3. Gravity conveyor in accordance with claim 1 or 2,
**characterized by** the fact that
the transport track comprises at least one element selected from the group consisting of endless belts rollers, wheels and sliding elements wherein, in particular some of the endless belts, rollers and/or wheels are mounted so as to freely rotate.

4. Gravity conveyor in accordance with any of the previous claims,
**characterized by** the fact that
the transport means are rollers, which are arranged in three or four parallel roller tracks

5. Gravity conveyor in accordance with any of the previous claims,
**characterized by the fact that**
at the end of the transport track at least one braking device is provided for braking the carriers.

6. Gravity conveyor in accordance with any of the previous claims,
**characterized by** the fact that
at the end of the transport track, at least one identifying device (16) is arranged for identijfymg the carriers.

7. Gravity conveyor in accordance with claim 5 or 6,
**characterized by** the fact that
braking device and identifying device are configured so as to cooperate in such a way that the braking device means is selected or activated as a function of identification of the carrier.

## Revendications

1. Voie de convoyage par gravité avec une voie de transport qui est placée inclinée par rapport à l'horizontale et qui comprend des moyens de transport (5, 7, 10, 12, 14) si bien que des supports qui peuvent être placés sur la voie de transport sont déplacés par gravité,
**caractérisée en ce que**
des premiers supports automoteurs (2) avec des roues sur leur face inférieure et des seconds supports non automoteurs (3) avec des surfaces d'appui sur leur face inférieure peuvent être transportés simultanément sur la voie de convoyage par gravité, les supports étant placés alignés avec leur face inférieure par rapport à la voie de transport et la voie de transport présentant au moins trois zones de transport (4, 5, 6, 7, 9, 10, 11, 12, 13, 14) qui s'étendent parallèlement l'une à l'autre le long du sens de transport, chaque zone de transport présentant des moyens de transport, les premiers supports (2) étant des conteneurs roulants et les seconds supports étant des europalettes,
les zones de transport présentant des plans de transport au moins partiellement différents qui sont décalés l'un par rapport à l'autre pour transporter les différents supports, une ou plusieurs zones de transport étant regroupées en groupes, chaque groupe étant configuré pour un ou plusieurs types de support et
les zones de transport étant séparées l'une de l'autre par un ou plusieurs évidements (21, 22) qui s'étendent parallèlement aux zones de transport le long du sens de transport de la voie de transport et les évidements (21, 22) définissant le long du sens de transport en continu sur toute la longueur de la voie de transport un espace libre prédéFni par rapport aux plans de transport des zones de transport voisines si bien que les roues des premiers supports peuvent être déplacées dans les évidements.

2. Voie de convoyage par gravité selon la revendication 1, **caractérisée en ce que** la vole de transport comprend des moyens de transport (5, 7, 10, 12, 14) qui peuvent être entraînés par les supports eux-mêmes.

3. Vole de convoyage par gravité selon la revendication 1 ou 2, **caractérisée en ce que** la voie de transport présente au moins un élément du groupe qui comprend les bandes sans fin, les galets, les roues et les éléments coulissants, cependant qu'en particulier les bandes sans fin, les galets et/ou les roues sont positionnés au moins partiellement rotatifs librement.

4. Voie de convoyage par gravité selon l'une des revendications précédentes, caractérisée en ce les moyens de transport sont des galets qui sont placés en trois ou quatre pistes de galets parallèles.

5. Voie de convoyage par gravité selon l'une des revendications précédentes, **caractérisée en ce qu'**au moins un dispositif de freinage pour freiner les supports est prévu à l'éxtrémité de la voie de transport

6. Voie de convoyage par gravité selon l'une des revendications précédentes, **caractérisée en ce qu'**au moins un dispositif d'identification (16) pour l'identification des supports est placé à l'extrémité de la voie de transport.

7. Voie de convoyage par gravité selon la revendication 5 et 6, **caractérisée en ce que** le dispositif de freinage et le dispositif d'identification sont configurés tels qu'ils coopèrent de telle manière que le dispositif de freinage est sélectionné ou activé en fonction de l'identification du support.
